# EUROPEAN PATENT APPLICATION

(11) **EP 3 333 397 A1**
(43) Date of publication of application: **13.06.2018**
(21) Application number: 16002620.9
(22) Date of filing: 08.12.2016
(51) Int. Cl.: F02D 41/30, F02D 41/32, F02P 5/15, F02P 9/00, F02D 19/06, G01M 15/10, G01M 15/11, G01M 15/12, F02D 35/02, F02D 41/00, F02D 41/14, F02D 41/28, F02D 41/06, F02D 41/24

(54) **SPARK IGNITION COMBUSTION ENGINE CONTROL**

(71) Applicant: Makita Corporation, Anjo-shi Aichi 446-8502 (JP)
(72) Inventor: Eichler, Enrico, 22089 Hamburg (DE); Frejno, Rafael, 21033 Hamburg (DE); Geist, Johannes, 22589 Hamburg (DE); Kellermann, Christian, 22946 Grande (DE)
(74) Representative: Müller-Boré & Partner Patentanwälte PartG mbB

(57) **Abstract**

The present invention relates to a combustion engine (1) comprising:
a combustion chamber (4) in which an air-fuel mixture can be ignited, and
a control device (24) capable of adjusting a factor (air-fuel ratio) of the combustion engine and further capable of carrying out a no-spark combustion detection step of detecting whether a no-spark combustion has occurred or not in the combustion chamber (4),
wherein the control device (24) is configured to adjust the factor of the combustion engine (1) so as to decrease the tendency toward a no-spark combustion when a no-spark combustion is detected in the no-spark combustion detection step, and
wherein the control device (24) is configured to adjust the factor of the combustion engine (1) so as to increase the tendency toward a no-spark combustion when no no-spark combustion is detected in the no-spark combustion detection step.

## Description

The present invention relates to a combustion engine, a method for controlling a combustion engine, and a computer program product.

A combustion engine can be controlled in order to obtain a desired operation of the engine under different ambient conditions, such as ambient temperature, ambient pressure, ambient humidity, or other engine conditions such as a clogged air filter or the use of different fuels. Typically, ambient conditions and/or conditions of the engine are identified, and at least a factor of the engine is adjusted in order to obtain a desired operation of the engine.

Recently, even in combustion engines for working tools, such as chainsaws, cutting-off wheel devices or the like, engine controls have been increasingly implemented. Particularly for combustion engines for working tools, it is desirable to realize the engine control at low costs and without many additional components.

Accordingly, it is an object of the present invention to provide a combustion engine, a respective method and computer program product, which enables an efficient control of the engine in a simple, cost effective manner.

The above object is solved by the subject-matter of the independent claims. Preferred embodiments are defined in the dependent claims.

According to the present invention, a combustion engine is provided, comprising: a combustion chamber in which an air-fuel mixture can be ignited, and a control device capable of adjusting a factor of the combustion engine and further capable of carrying out a no-spark combustion detection step of detecting whether a no-spark combustion has occurred or not in the combustion chamber, wherein the control device is configured to adjust the factor of the combustion engine so as to decrease the tendency toward a no-spark combustion when a no-spark combustion is detected in the no-spark combustion detection step, and wherein the control device is configured to adjust the factor of the combustion engine so as to increase the tendency toward a no-spark combustion when no no-spark combustion is detected in the no-spark combustion detection step.

Advantageously, the control device of the combustion engine of the present invention can control the combustion engine based on the occurrence of a no-spark combustion, which is a reliable indicator for the engine- and ambient conditions influencing the combustion.

Further advantageously, by adjusting the factor of the combustion engine so as to decrease the tendency toward a no-spark combustion when a no-spark combustion has been detected in the no-spark combustion detection step, and by adjusting the factor of the combustion engine so as to increase the tendency toward a no-spark combustion when no no-spark combustion has been detected in the no-spark combustion detection step, the factor of the combustion engine can be adjusted substantially to a value located at or in proximity of a borderline between a value at which a no-spark combustion occurs and a value at which no no-spark combustion occurs. This borderline can be referred to as "no-spark combustion border" or "NSC-border". Such a value of the factor of the combustion engine at the NSC-border can represent a favorable operating state for a combustion engine.

Even further advantageously, when the ambient conditions and/or engine conditions change in such a way that the tendency toward a no-spark combustion is increased, e.g. when the ambient temperature rises, the ambient pressure rises and/or the engine temperature rises due to a high load or the like, the control device will automatically adjust the factor of the combustion engine so as to decrease the tendency toward a no-spark combustion. With this adjustment, the combustion temperature of the air-fuel mixture will cool down to thereby prevent overheating of the combustion engine. On the other hand, when the ambient conditions and/or engine conditions change in such a way that the tendency toward a no-spark combustion is decreased, e.g. when the ambient temperature becomes lower, the ambient pressure becomes lower and/or the engine temperature becomes lower due to a cold start or the like, the control device will automatically adjust the factor of the combustion engine so as to increase the tendency toward a no-spark combustion. With this adjustment, typically the fuel efficiency of the combustion engine is increased and, at the same time, the combustion engine is heated up more quickly to reach the working temperature.

Thus, the combustion engine can be efficiently controlled in a simple, cost effective manner.

The type and design of the combustion engine is not limited. The combustion engine can be a four-stroke engine, a two-stroke engine or a Wankel engine. Also, the configuration of the cylinder defining the combustion chamber and the number thereof is not limited. The combustion engine can be a combustion engine for a working tool, such as a chainsaw, a cutting-off wheel device, a brush cutter, a lawn mower or the like. However, the combustion engine can also be an outboard engine, a scooter engine, a motorcycle engine, an engine for a small passenger car, an engine for a ultra-light aircraft or the like. The control device can be mounted to the combustion engine.

The no-spark combustion detection step can be carried out during one set of a compression stroke and a expansion stroke of the combustion chamber. In other words, the control device can be capable of carrying out the no-spark combustion detection step in the combustion chamber in one cycle of the combustion chamber to detect whether a no-spark combustion has occurred or not in said one cycle. One cycle of the combustion engine with respect to the combustion chamber includes intake, compression, expansion and exhaust. In a two-stroke engine, one cycle corresponds to 360° rotation of the crankshaft, and in a four-stroke engine, one cycle corresponds to 720° rotation of the crankshaft. The frequency of selectively carrying out the no-spark combustion detection step can be chosen according to the need and the factor of the combustion engine to be adjusted. For example, the no-spark combustion detection step can be carried out every 100 cycles or every 10 cycles for continued adjustment of the factor.

The factor of the combustion engine to be adjusted is not limited. For example, the factor can be the air-fuel ratio of the air-fuel mixture, the opening and/or closing timings of the intake and/or exhaust valves, the charging pressure of the intake air, the amount of exhaust gas recirculation (EGR), the cooling amount of the combustion engine, or any other factor having a known or determinable influence on the tendency toward a no-spark combustion. The factor of the combustion engine can also be referred to as a parameter of the combustion engine.

The no-spark combustion refers to a combustion of an air-fuel mixture in the combustion chamber which is not initiated by a spark of a spark plug. In the no-spark combustion, the air-fuel mixture in the combustion chamber is not ignited by a spark of a spark plug, but by the compression heat of the air-fuel mixture and/or by hot parts in the combustion chamber and/or by radicals present in the air-fuel mixture. The no-spark combustion can also be referred to as a self-ignition combustion. The occurrence of a no-spark combustion is mainly influenced by the temperature, the pressure and the air-fuel ratio of the air-fuel mixture, and also by the amount of radicals present in the air-fuel mixture, before the ignition of the air-fuel mixture in the compression stroke.

The occurrence of a no-spark combustion in the combustion chamber, particularly during one cycle of the combustion chamber of the combustion engine, can be detected by the control device in various ways.

One possibility to detect the occurrence of a no-spark combustion is to detect a state of the exhaust gas. In particular, it is possible to detect the state of the exhaust gas of a cycle of the combustion chamber and to detect a state of the exhaust gas of a following cycle of the combustion chamber , preferably directly following said cycle, and to compare the detection results. The state of the exhaust gas to be detected can be the exhaust gas temperature and/or the exhaust gas pressure and/or the exhaust gas composition. When a no-spark combustion does not occur in the following cycle, the exhaust gas temperature and the exhaust gas pressure will drop, provided that a combustion has taken place in the preceding cycle. The preceding cycle is the cycle preceding the following cycle. On the other hand, when a no-spark combustion occurs in the following cycle, the exhaust gas temperature and the exhaust gas pressure will rise or be substantially equal to that of the preceding cycle, provided that a combustion has taken place in the preceding cycle. In order to ensure that a combustion takes place in the preceding cycle, a spark plug or glow plug can be applied and/or the tendency toward a no-spark combustion can be temporarily increased in the preceding cycle by means of an activation action which will be described in more detail later. Detecting the exhaust gas composition, particularly the presence and/or amount of certain substances, also enables to determine whether or not a no-spark combustion has occurred in the cycle in which the no-spark combustion detection step is carried out.

Another possibility to detect the occurrence of a no-spark combustion is to detect a state of the burning or not burning air-fuel mixture in the combustion chamber. In particular, it is possible to detect the state of the burning or not burning air-fuel mixture in the combustion chamber of a cycle of the combustion chamber and to detect a state of the burning or not burning air-fuel mixture in the combustion chamber of a following cycle, preferably directly following said spark cycle, and to compare the detection results. The state of the burning or not burning air-fuel mixture to be detected can be the ionization of the burned or not burned air-fuel mixture. By measuring the ionization of the burning or not burning air-fuel mixture in the combustion chamber, the occurrence of a combustion in the combustion chamber can be reliably detected, since a flame conducts ions significantly better than a not burning air-fuel mixture. When a no-spark combustion does not occur in the following cycle, the ionization of the not burning air-fuel mixture will drop, provided that a combustion has taken place in the preceding cycle. On the other hand, when a no-spark combustion occurs in the following cycle, the ionization of the burning air-fuel mixture will rise or be substantially equal to that of the preceding cycle, provided that a combustion has taken place in the preceding cycle. However, it is also possible to detect a no-spark combustion in a cycle, when the ionization, i.e. the current flowing through an ionic current sensor, abruptly rises during a cycle.

Another possibility to detect the occurrence of a no-spark combustion is to detect a state of the combustion engine other than the exhaust gas. In particular, it is possible to detect a state of the combustion engine of a cycle of the combustion chamber and to detect a state of the combustion engine of a following cycle of the combustion chamber, preferably directly following said cycle, and to compare the detection results. The state of the combustion engine to be detected can be the temperature and/or vibrations/accelerations in the proximity of the combustion chamber, e.g. at the cylinder wall, and/or the rotational speed of the crank shaft of the combustion engine. When a no-spark combustion does not occur in the following cycle, the temperature and the intensity of the vibrations/accelerations in the proximity of the combustion chamber and the rotational speed of the crank shaft of the combustion engine will drop, provided that a combustion has taken place in the preceding cycle. On the other hand, when a no-spark combustion occurs in the following cycle, the temperature and the intensity of the vibrations/accelerations in the proximity of the combustion chamber and the rotational speed of the crank shaft of the combustion engine will rise or be substantially equal to that of the preceding cycle, provided that a combustion has taken place in the preceding cycle. In view of a fast detection speed, it is preferred to detect the occurrence of a no-spark combustion by detecting a state of the combustion engine other than the rotation speed of the crank shaft.

The above described means and methods for detecting the occurrence of a no-spark combustion by the no-spark combustion detection step can be combined for more accurate results and/or to obtain redundancy.

Advantageously, by comparing a state of the exhaust gas and/or the combustion engine in a cycle and in a following cycle, the occurrence of a no-spark combustion can be simply and reliably detected. In particular, it is not necessary to precisely detect absolute values of the states, since only the relative change of the states are considered. However, it is also possible to directly detect a no-spark combustion in the no-spark combustion detection step by, for example, precisely detecting absolute values of the states and comparing them with memorized reference values, without comparing them with values detected in a preceding cycle.

The control device can be configured to adjust the factor of the combustion engine based on whether a no-spark combustion is detected in the no-spark combustion detection step or not, with varying adjustment steps. This means that the magnitude or amount of change of the factor by the adjustment can be varied. For example, the adjustment of the factor for decreasing the tendency toward a no-spark combustion can be carried out with larger adjustment steps as compared to the adjustment of the factor for increasing the tendency toward a no-spark combustion, or vice versa. Another possibility is to carry out the adjustment with larger adjustment steps at first, until the detection result in two subsequent no-spark combustion detection steps differ for the first time, and to carry out the adjustment with smaller adjustment steps thereafter. It is also possible to vary the adjustment steps depending on the operating condition of the combustion engine identified by the control device. The adjustment steps can particularly be varied such that the control device can adjust the factor to a stable operating point quicker while ensuring that the factor is not adjusted to a value having a negative influence on the combustion engine. Furthermore, the control device can be configured to adjust the factor within a predetermined or predeterminable range. For example, the factor air-fuel ratio can be adjusted within ignition boundaries of possible or selected fuels.

Preferably, the control device is configured to memorize respective factor adjustments of two subsequent no-spark combustion detection steps, if detection results of said two subsequent no-spark combustion detection steps differ.

When detection results of two subsequent no-spark combustion detection steps differ, i.e. when a no-spark combustion is detected in a no-spark combustion detection step and no no-spark combustion is detected in a subsequent no-spark combustion detection step, or vice versa, this means that the NSC-border is contained between the respective adjusted values of the factor at the time of the two subsequent no-spark combustion detection steps. This, in turn, means that the two respective adjusted values of the factors, i.e. factor adjustments, are close to the NSC-border corresponding to the operating condition at the time. Any one of the two memorized factor adjustments, or any value of the factor therebetween or calculated therefrom, can be used, for example, as a starting value of the factor at the time of the next engine start. The selected value of the factor can also be increased or decreased slightly, e.g. by 10% or 20%, for safety so as to prevent damaging of the engine in case the engine is started under a completely different operating condition. The control device can comprise a memory for storing the factor adjustments.

Preferably, the combustion engine further comprises: a spark plug for igniting the air-fuel mixture in the combustion chamber, wherein the control device is capable of controlling sparking actions of the spark plug, wherein the control device is configured to selectively carry out a spark-ignition stroke in which the air-fuel mixture is spark-ignited by the spark plug and a no-spark-ignition stroke in which generation of a spark by the spark plug is suppressed in the spark-ignition stroke, and wherein the control device is configured to carry out the no-spark combustion detection step during the no-spark-ignition stroke.

Advantageously, the occurrence of the no-spark combustion can be reliably detected in the no-spark-ignition stroke in which the spark by the spark plug is suppressed. In particular, as indicated above, by providing a spark-ignition stroke and a no-spark-ignition stroke, the occurrence of a no-spark combustion can be simply and reliably detected by detecting and comparing the states of the exhaust gas and/or the combustion engine of the respective strokes. Alternatively, by carrying out a late-spark-ignition stroke, in which a generation of a spark by the spark plug is delayed with respect to the spark-ignition stroke, instead of a no-spark-ignition stroke, the occurrence of a no-spark combustion can be reliably detected while making sure that a combustion takes place in the late-spark-ignition stroke. In other words, when no no-spark combustion occurs in the late-spark-ignition stroke, at least a spark-ignition combustion takes place, which improves engine smoothness. On the other hand, the timing window for reliably detecting a no-spark combustion is narrowed. The late-ignition timing can be set in a timing later than the ignition timing of the spark-ignition stroke and also later than the timing at which a no-spark combustion, if any, typically occurs.

The spark-ignition stroke is carried out during one set of a compression stroke and a expansion stroke of the combustion chamber. Similarly, the no-spark-ignition stroke is carried out during one set of a compression stroke and an expansion stroke of the combustion chamber. In other words, the spark-ignition stroke and the no-spark-ignition stroke can each comprise a compression stroke and an expansion stroke, respectively. The no-spark-ignition stroke differs from the spark-ignition stroke in that the generation of the spark by the spark plug is suppressed. The control device can be at least capable of suppressing the generation of a spark by the spark plug in the combustion chamber in one cycle of the combustion chamber.

Preferably, the factor of the combustion engine to be adjusted is an air-fuel ratio of the air-fuel mixture.

Advantageously, by adjusting the air-fuel ratio of the air-fuel mixture, a factor of the combustion engine having a strong influence on the performance of the combustion engine is controlled. In particular, by adjusting the air-fuel ratio of the air-fuel mixture, a desired operation of the combustion engine under different ambient conditions, such as ambient temperature, ambient pressure, ambient humidity, or other engine conditions such as a clogged air filter or the use of different fuels, can be reliably obtained.

The air-fuel ratio can be adjusted by adjusting the fuel supply amount and/or by adjusting the air supply amount. The fuel supply amount can be adjusted by fuel supply means which can be connected to the control device. In particular, the fuel supply amount can be adjusted by means of electronic carburetors having a solenoid valve or an Electronic Tesla Restrictor (ETR) as described in, e.g., EP 2 435 682 B1. The fuel supply amount can also be adjusted by means of a direct or indirect fuel injection system.

Preferably, the control device is configured to adjust the air-fuel ratio to the rich side when a no-spark combustion has been detected in the no-spark combustion detection step, and to adjust the air-fuel ratio to the lean side when no no-spark combustion has been detected in the no-spark combustion detection step.

As mentioned above, the occurrence of a no-spark combustion is mainly influenced by the temperature, the pressure and the air-fuel ratio of the air-fuel mixture, and also by the amount of radicals present in the air-fuel mixture. In use, when the combustion engine has reached a stable working temperature, the temperature and pressure of the air-fuel mixture and the amount of radicals in the air-fuel mixture is unlikely to change drastically within a short period of time. Thus, the tendency for a no-spark combustion to occur is then mainly influenced by the air-fuel ratio of the air-fuel mixture, wherein a leaner air-fuel ratio increases the tendency toward a no-spark combustion and a richer air-fuel ratio decreases the tendency toward a no-spark combustion. A lean air-fuel ratio has a higher portion of air as compared to a rich air-fuel ratio. It is also noted that a higher temperature of the air-fuel mixture increases the tendency toward a no-spark combustion.

Advantageously, the NSC-borderline air-fuel ratio is substantially the same for any type of fuel suitable for combustion engines, such as gasoline, ethanol or mixtures thereof. This means that even if a different fuel is used for the combustion engine, the control device adjusts the air-fuel ratio by increasing/decreasing the fuel supply amount and/or the air supply amount until the borderline air-fuel ratio is reached again. Thus, the combustion engine can automatically adapt itself to different fuel types.

Further advantageously, with the above configuration of the control device, when the ambient conditions and/or engine conditions change in such a way that the tendency toward a no-spark combustion is increased, e.g. when the ambient temperature rises, the ambient pressure rises and/or the engine temperature rises due to a high load or the like, the control device will automatically adjust the air-fuel ratio to the richer side. With this adjustment, the combustion temperature of the air-fuel mixture will cool down to thereby prevent overheating of the combustion engine. At the same time, depending on the air-fuel ratio before adjustment, particularly when starting with an air-fuel ratio of λ=1, the torque of the combustion engine will typically increase due to the richer air-fuel ratio, which is favorable when having a high load. It is noted that when starting the adjustment from an air-fuel ratio of λ=1, a richer air-fuel ratio will increase the torque of the combustion engine, whereas a leaner air-fuel ratio will increase the fuel efficiency of the combustion engine.

On the other hand, with the above configuration of the control device, when the ambient conditions and/or engine conditions change in such a way that the tendency toward a no-spark combustion is decreased, e.g. when the ambient temperature becomes lower, the ambient pressure becomes lower and/or the engine temperature becomes lower due to a cold start or the like, the control device will automatically adjust the air-fuel ratio to the leaner side. With this adjustment, the fuel efficiency of the combustion engine is increased and, at the same time, the combustion engine is heated up more quickly to reach the working temperature.

Preferably, the combustion engine further comprises a sensor for detecting a characteristic indicative of an occurrence of the no-spark combustion.

The sensor is preferably mounted to the combustion engine and connected to the control device. The characteristic is indicative of whether a no-spark combustion has occurred in the cycle in which the no-spark combustion detection step is carried out, preferably in a no-spark-ignition stroke, or not. The characteristic can also be referred to as a parameter indicative of an occurrence of the no-spark combustion. As mentioned above, the characteristic can be a characteristic of the exhaust gas, such as the exhaust gas temperature, the exhaust gas pressure and/or the exhaust gas composition. The characteristic can also be a characteristic of the burning or not burning air-fuel mixture within the combustion chamber, such as the ionization thereof. The characteristic can also be a characteristic of the engine, such as the temperature and/or vibrations/accelerations in a proximity of the combustion chamber, the rotational speed of the crankshaft and/or sound emitted from the combustion chamber. The control device is preferably configured to compare the detection result of the no-spark-ignition stroke with the detection result of the - preferably directly - preceding spark-ignition stroke to determine the occurrence of a no-spark combustion.

Preferably, the sensor is a temperature sensor.

The temperature sensor can comprise: an infrared light emitting element; a holder for holding the infrared light emitting element, the holder comprising a first chamber and a second chamber separated by a wall; and an optical sensor arranged in the second chamber, wherein the wall includes an optical element, so that infrared light emitted from the infrared light emitting element passes through the first chamber, the optical element and the second chamber to reach the optical sensor.

Advantageously, the above configuration of the temperature sensor enables to detect high temperatures without the danger of damaging the optical sensor of the temperature sensor. In particular, since the optical sensor is arranged in the second chamber separated from the first chamber by the wall, heat from the infrared light emitting element is prevented from reaching the optical sensor. This enables to arrange the optical sensor close to the infrared light emitting element and obviates the need for additional optical fibers for directing the infrared light onto an remotely arranged optical sensor. Additional optical fibers and coupling parts therefor lead to high costs of the temperature sensor, and come with difficulties for mounting the temperature sensor. Further advantageously, the configuration of the temperature sensor enables fast detection speeds in addition to the simple manufacturing at low costs.

The infrared light emitting element is configured to be arranged in contact with the medium or fluid the temperature of which is to be detected: For example, the infrared light emitting element can be arranged in an exhaust gas pipe of a combustion engine to be in contact with the exhaust gas. When the infrared light emitting element heats up, it emits infrared light according to its temperature. In other words, the more the infrared light emitting element is heated up, the higher will be the intensity of the emitted infrared light. By detecting the emitted infrared light by the optical sensor, the temperature of the medium or fluid can be determined.

The infrared light emitting element can be formed from any suitable material which can emit infrared light and which preferably can withstand high temperatures. The relationship between the temperature of the infrared light emitting element and the intensity of its emitted infrared light can be known or can be determinable. The infrared light emitting element can be configured to adapt its temperature to the temperature of the medium or fluid fast, i.e. by being formed sufficiently small and/or thin. The infrared light emitting element can have the form of a membrane or sheet. The infrared light emitting element can be arranged in the first chamber of the holder, but preferably is arranged at an axial end of the holder and preferably closes the first chamber at the axial end of the holder in the axial direction.

The holder preferably has an elongated and/or cylindrical shape. The holder preferably has a closed configuration so that no light from outside can enter the first and second chamber, particularly the optical sensor. The infrared light emitting element can be held at one axial end of the holder, and the optical sensor can be arranged at the other axial end of the holder in the second chamber. The optical sensor can close the second chamber at said other axial end in the axial direction. In order to prevent heat from reaching the optical sensor, the holder can comprise outwardly extending heat fins. The holder can comprise mounting flanges to mount the temperature sensor to a target, for example a combustion engine.

The wall can be arranged in the holder so that it extends in a direction perpendicular to the axial direction of the holder. The wall is arranged between the infrared light emitting element and the optical sensor, and separates the first chamber and the second chamber, so that the second chamber can remain cool even when the infrared light emitting element is subjected to high temperatures.

The optical sensor can be any optical sensor capable of detecting infrared light. For example, the optical sensor can be a photodiode, a photovoltaic, a phototransistor or a photoconductive device. The optical sensor can output an electric signal in accordance with the intensity of the detected infrared light.

The optical element can be, for example, a lens, a window or a pinhole. The optical element has the function of directing infrared light emitted from the infrared light emitting element onto the optical sensor, while preventing heat from the fist chamber to reach the second chamber. In particular, the optical element can be configured such that only infrared light from a part of the infrared light emitting element is directed onto the optical sensor. For example, the optical element can be configured such that only infrared light from a center part of the infrared light emitting element, which is distanced from the holder and less thermally influenced by the holder, is directed onto the optical sensor. Furthermore, the optical element has the function of reducing the intensity of the emitted infrared light to a level suitable for the optical sensor. Additionally, the optical element can have the function of a filter.

The infrared light emitting element can be a metallic membrane or metallic sheet. In particular, the metallic membrane or sheet can be formed of a FeCr-alloy or stainless steel. The metallic membrane or sheet can be crimped onto an axial end of the holder. Preferably, the center portion of the infrared light emitting element bulges out spherically, which can be simply realized when crimping the infrared light emitting element onto the holder. However, it is also possible to form the infrared light emitting element and at least part of the holder from one part, particularly by stamping a metal sheet.

The center of the infrared light emitting element, the center of the optical element and the center of the optical sensor can be arranged substantially along an axis. The center of the infrared light emitting element, the center of the optical element and the center of the optical sensor are preferably arranged substantially along the axis of the holder, which then coincides with the optical axis of the optical element.

A first axial distance from the optical element to the infrared light emitting element, a second axial distance from the optical element to the optical sensor and the optical properties of the optical element can be configured such that only infrared light from a center portion of the infrared light emitting element comprising less than 50%, preferably less than 30%, of the surface area of the infrared light emitting element reaches the optical sensor. Advantageously, the center portion of the infrared light emitting element is distanced from the holder and, thus, less thermally influenced by the holder, so that the temperature of the center portion of the infrared light emitting element more accurately reflects the temperature of the medium or fluid the infrared light emitting element is in contact with. Hence, an accurate temperature sensor with a fast detection speed can be obtained.

The optical element can be a pinhole. Advantageously, the configuration of the optical element as a pinhole realizes the desired functions of the optical element in the most simple manner. The pinhole can be manufactured easily and can be formed sufficiently small such that substantially no heat is directly exchanged between the first chamber and the second chamber through the pinhole. The shape of the pinhole is preferably circular.

The pinhole can take up less than 5% of the surface area of the wall. For example, the pinhole can have a diameter of about 2 mm or less.

The holder can comprise material having low heat conductivity. Advantageously, by forming the holder from a material having low heat conductivity, heat from the infrared light emitting element can be prevented from reaching the optical sensor. This enables to prevent damaging of the optical sensor and also to make the temperature sensor more compact, since the optical sensor can be arranged more closely to the infrared light emitting element. For example, the holder can be formed of thin walled stainless steel or PEEK-material. The wall thickness of the holder can be 0.1 mm or less, so that the holder has low heat conductivity in the axial direction of the holder and at the same time a large outer cooling surface. The holder can have the form of a tube.

A PCB can be mounted to the holder. The PCB (printed circuit board) can be arranged in the second chamber, more preferably mounted at the axial end of the holder where the optical sensor is mounted. The optical sensor can be mounted on the PCB. Due to the arrangement of the PCB, damaging of the PCB due to heat from the infrared light emitting element can be prevented. The PCB can comprise means for signal processing.

It is possible to configure the temperature sensor such that no optical fibers are arranged in the holder and/or no optical fibers are attached to the holder for guiding the infrared light emitted from the infrared light emitting element. As mentioned above, additional optical fibers and coupling parts therefor lead to high costs of the temperature sensor, and come with difficulties for mounting the temperature sensor. Advantageously, the above configuration of the temperature sensor obviates the need for such additional optical fibers and coupling parts therefor.

Preferably, the sensor is a ionic current sensor.

The ionic current sensor can detect the ionization of the burning or not burning air-fuel mixture within the combustion chamber. The ionic current sensor can be the spark plug of the combustion chamber. For example, a measurement voltage can be applied to the spark plug, which is sufficiently high to reliably detect a flow of current but not high enough to generate a spark. The measurement voltage can be, for example, about 400 V. By measuring the current flowing through the spark plug, the occurrence of a combustion in the combustion chamber can be reliably detected, since a flame conducts ions significantly better than a not burning air-fuel mixture. Therefore, when the current flowing through the spark plug increases abruptly, this points to a combustion of the air-fuel mixture.

Preferably, the combustion engine is configured to carry out an activation action for increasing or decreasing the tendency toward the no-spark combustion during the no-spark combustion detection step.

The activation action is to be distinguished from the adjustment of the factor of the combustion engine for increasing or decreasing the tendency toward a no-spark combustion based on the occurrence of a no-spark combustion. The activation action only temporarily increases or decreases the tendency toward the no-spark combustion during the no-spark combustion detection step, i.e. substantially during the cycle in which the no-spark combustion detection step is carried out.

Preferably, the combustion engine is configured to carry out an activation action for increasing or decreasing the tendency toward the no-spark combustion in the no-spark-ignition stroke.

As mentioned above, the occurrence of a no-spark combustion is mainly influenced by the temperature, the pressure and the air-fuel ratio of the air-fuel mixture, and also by the amount of radicals present in the air-fuel mixture. Accordingly, the activation action for increasing the tendency toward the no-spark combustion during the no-spark combustion detection step can comprise one or more of increasing the temperature of the air-fuel mixture, increasing the pressure of the air-fuel mixture and increasing the amount of radicals present in the air-fuel mixture. The activation action for decreasing the tendency toward the no-spark combustion during the no-spark combustion detection step can comprise one or more of decreasing the temperature of the air-fuel mixture, decreasing the pressure of the air-fuel mixture and decreasing the amount of radicals present in the air-fuel mixture. Preferably, the activation action is carried out directly prior to the cycle in which the no-spark combustion detection step is carried out. More preferably, the activation action is carried out in a spark-ignition stroke or cycle directly preceding the no-spark-ignition stroke.

The activation action can comprise one or more of adjusting the ignition timing, adjusting the intake valve timing, adjusting the exhaust valve timing, adjusting or applying a turbo-charger or compressor, adjusting the exhaust-counterpressure, applying EGR or adjusting the amount thereof, applying or adjusting an electric glow plug and applying or adjusting an intake-air heater or cylinder heater. The activation action can be controlled and selectively carried out by the control device.

Advantageously, the activation action increases or decreases the tendency of an occurrence of a no-spark combustion in the following cycle in which the no-spark combustion detection step is carried out, even though the ambient conditions stay the same. Also, the no-spark combustion promoting or suppressing effect of the activation action can be limited substantially to the directly following cycle. For example, by increasing the tendency of an occurrence of a no-spark combustion in the following cycle by the activation action, the occurrence of a no-spark combustion in the following cycle can be detected and utilized as an indicator of the operating condition of the combustion engine, while the combustion engine actually operates in a state where no no-spark combustion occurs.

Preferably, the activation action is varied depending on a condition of the engine and/or an ambient condition

The condition of the combustion engine can be one or more of: a rotation speed of the combustion engine, a rotation speed acceleration of the combustion engine, a load of the combustion engine and a temperature of the combustion engine. The ambient condition can be one or more of: an ambient temperature, an ambient pressure, an ambient humidity and alternative fuels. Advantageously, by varying the activation action depending on the condition of the combustion engine and/or the ambient condition as indicated above, the control of the combustion engine can be adapted and optimized with respect to said predetermined or predeterminable conditions.

Preferably, the activation action includes varying the ignition timing by the spark plug in a cycle prior to the no-spark combustion detection step.

The cycle in which the ignition timing is varied, is preferably the cycle directly preceding the cycle in which the no-spark combustion step is carried out. More preferably, the ignition timing is varied in a spark-ignition stroke directly preceding the no-spark-ignition stroke. Varying the ignition timing can comprise delaying or advancing the ignition timing. Varying the ignition timing can also be referred to as adjusting the ignition timing or shifting the ignition timing. For increasing the tendency toward the no-spark combustion in the cycle in which the no-spark combustion detection step is carried out, the ignition timing in a preceding cycle can be delayed. For decreasing the tendency toward the no-spark combustion in the cycle in which the no-spark combustion detection step is carried out, the ignition timing in a preceding cycle can be advanced.

According to another aspect of the present invention, a method for controlling a combustion engine is provided, comprising: carrying out a no-spark combustion detection step of detecting whether a no-spark combustion has occurred or not in a combustion chamber, adjusting the factor of the combustion engine so as to decrease the tendency toward a no-spark combustion when a no-spark combustion is detected in the no-spark combustion detection step, and adjusting the factor of the combustion engine so as to increase the tendency toward a no-spark combustion when no no-spark combustion is detected in the no-spark combustion detection step.

The indications made above with respect to the combustion engine of the present application apply mutatis mutandis to the method of the present application.

According to another aspect of the present invention, a computer program product is provided, comprising computer-readable instructions, which, when loaded and executed on a computer system, cause the computer system to perform operations according to the above described method.

The computer system can be a control device of the combustion engine, particularly an ECU of the combustion engine. The indications made above with respect to the combustion engine and the method of the present application apply mutatis mutandis to the computer program product of the present application.

In the following, preferred embodiments of the present invention will be described with reference to the accompanying figures.
- **Fig. 1**: shows a schematic illustration of a combustion engine according to an embodiment;
- **Fig. 2**: shows a diagram illustrating the influence of a measured CO-content of the exhaust gas and a measured cylinder temperature of the combustion engine on the occurrence of a no-spark combustion;
- **Fig. 3**: shows a diagram illustrating a possible adjustment of the air-fuel ratio;
- **Fig. 4**: shows a diagram illustrating a control area for an operation of the combustion engine at low ambient temperatures;
- **Fig.5**: shows a diagram illustrating a control area for an operation of the combustion engine at high ambient temperatures;
- **Fig. 6**: shows a diagram illustrating the influence of an activation action by varying ignition timing on the no-spark combustion border;
- **Fig.7**: shows a table illustrating a possible variation of the activation action depending on the rotation speed of the combustion engine;
- **Fig.8**: shows a sequence diagram for a possible control of the combustion engine;
- **Fig. 9**: shows a perspective view of the combustion engine according to another embodiment;
- **Fig. 10**: shows an exploded view of a temperature sensor;
- **Fig. 11**: shows a perspective view of the temperature sensor of Fig. 10;
- **Fig. 12**: shows a schematic illustration of the temperature sensor of Figs. 10 and 11 in a side view;
- **Fig. 13**: shows a schematic illustration of the control device of the combustion engine of the embodiments;
- **Fig. 14**: shows a schematic illustration of the electronic circuit of the temperature sensor;
- **Fig. 15**: shows temperature measurement results obtained by the control device in which no no-spark combustion has occurred;
- **Fig. 16**: shows temperature measurement results obtained by the control device in which a no-spark combustion has occurred.

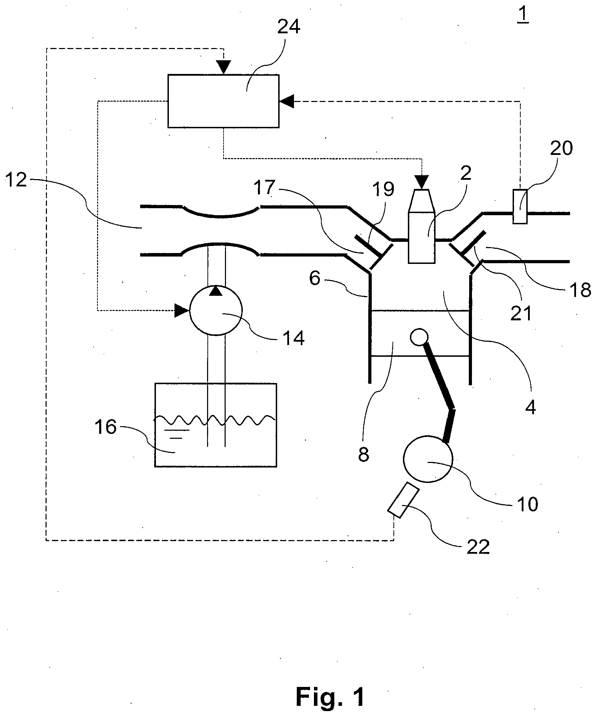

Fig. 1 shows a schematic illustration of a combustion engine 1 according to an embodiment. The combustion engine 1 comprises a spark plug 2 for igniting an air-fuel mixture in the combustion chamber 4. The combustion chamber 4 is delimited by a cylinder 6 and a piston 8 which is reciprocatingly movable in within the cylinder 6. The piston 8 is connected to a crank shaft 10 via a connecting rod. Air is sucked in from an air intake 12 and mixed with fuel to form an air-fuel mixture which then enters the combustion chamber 4 via the intake port 17. The fuel is introduced into the intake air by a fuel supply means 14, which can be an electronic carburetor such as an Electronic Tesla Restrictor, for example. By controlling the fuel supply means 14, an air-fuel ratio of the air-fuel mixture, i.e. a factor of the combustion engine 1, can be adjusted. The fuel supply means 14 draws fuel from the fuel tank 16. The fuel can be gasoline, ethanol, a mixture of gasoline and ethanol, or any other fuel suitable for a combustion engine.

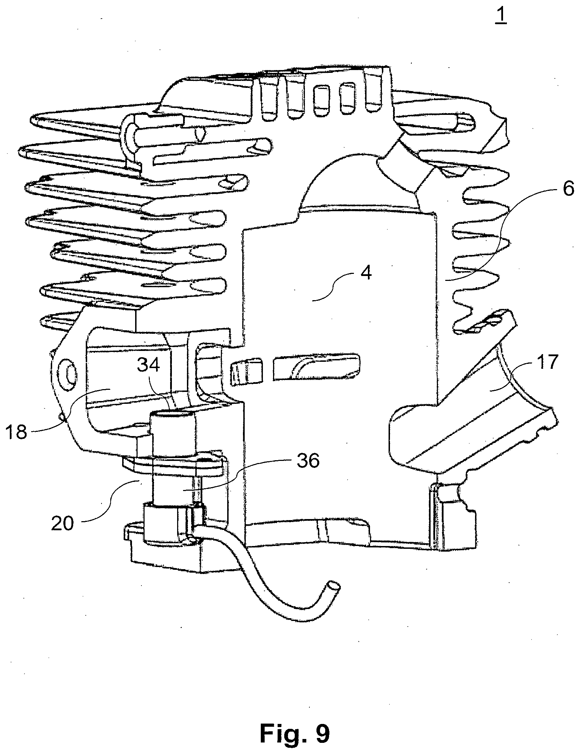

On the exhaust side of the combustion chamber 4, namely in proximity of the exhaust port 18, a temperature sensor 20 is arranged as a means for detecting a no-spark combustion. Since the combustion engine 1 schematically illustrated in Fig. 1 is a four stroke engine, an intake valve 19 and an exhaust valve 21 is provided for controlling the air-fuel mixture intake from the intake port 17 and the exhaust of exhaust gas from the exhaust port 18, respectively. In case of a two stroke engine, such as one shown in Fig. 9, no intake valve and exhaust valve is provided and the arrangement of the intake port 17 and exhaust port 18 is different. It is noted that the combustion engine 1 of the present invention can be a four stroke engine or a two stroke engine. In the present embodiments, a rotation sensor 22 is arranged at the crank shaft 10 to detect the rotation angle and/or speed of the crank shaft 10 and the combustion engine 1.

The spark plug 2, the temperature sensor 20, the fuel supply means 14 and the rotation sensor 22 are connected to the control device 24. The control device 24 can control sparking actions of the spark plug 2. In particular, the control device 24 can carry out a no-spark combustion detection step of detecting whether a no-spark combustion has occurred or not in the combustion chamber 4. Furthermore, the control device 24 can carry out a spark-ignition stroke in which a spark is generated by the spark plug 2 at a selected timing during a set of a compression stroke and expansion stroke of the combustion chamber 4. The control device 24 can also selectively carry out one or more no-spark-ignition strokes in which the generation of a spark by the spark plug 2 is suppressed during a set of a compression stroke and expansion stroke of the combustion chamber 4, respectively. In the present embodiment, the no-spark combustion detection step is carried out by the control device 24 during the no-spark-ignition stroke to detect whether or not a no-spark combustion has occurred in the no-spark-ignition stroke. During normal operation, the spark timing of the spark plug 2 in the spark-ignition stroke, i.e. the ignition timing by the spark plug 2 in the spark-ignition stroke, is set to a timing for optimal power output and minimal emissions, in a range of e.g. 22° to 32° crank angle before top dead center (CA BTDC). In the present embodiment, the spark timing of the spark plug 2 in the spark-ignition stroke during normal operation is 25° CA BTDC. However, the control device 24 can also selectively carry out an activation stroke in which the spark timing of the spark plug 2 is varied as compared to the spark timing during normal operation, as an activation action to increase or decrease the tendency toward a no-spark combustion in the no-spark-ignition stroke following the activation stroke. In the present embodiment, the spark timing of the spark plug 2 is delayed as compared to the spark timing during normal operation in the activation stroke, e.g. at 5° CA BTDC. It is noted that also an advanced spark timing in the activation stroke with respect to the spark timing of the spark-ignition stroke is possible as an activation action to decrease the tendency toward a no-spark combustion in the no-spark-ignition stroke following the activation stroke. The activation stroke will be described in more detail later. The crank angle is detected by the rotation sensor 22.

During operation of the combustion engine 1, the control device 24 is configured to carry out the activation stroke and then, in the following cycle, carry out the no-spark-ignition stroke, and detect whether a no-spark combustion has occurred in the no-spark-ignition stroke or not. If a no-spark combustion is detected in the no-spark-ignition stroke, the control device 24 controls the fuel supply means 14 in order to adjust the air-fuel ratio to the rich side. If no no-spark combustion is detected in the no-spark-ignition stroke, the control device 24 controls the fuel supply means 14 in order to adjust the air-fuel ratio to the lean side. The control strategy and the configuration of the control device will be described in more detail later.

The temperature sensor 20 measures the temperature of the exhaust gas directly at or in proximity of the exhaust port 18. The temperature sensor 20 has a fast response time so that a temperature difference of an exhaust gas of two following cycles can be detected. The control device 24 compares the exhaust gas temperature of the no-spark-ignition stroke with at least one exhaust gas temperature of a preceding spark-ignition stroke. If the exhaust gas temperature drops in the no-spark-ignition stroke, it is determined that no no-spark combustion has occurred in the no-spark-ignition stroke, whereas if the exhaust gas temperature rises or stays substantially the same in the no-spark-ignition stroke, it is determined that a no-spark combustion has occurred in the no-spark-ignition stroke. Since the control device 24 merely requires information regarding the change in the exhaust gas temperature for detecting a no-spark combustion, the temperature sensor 20 is not required to provide accurate absolute temperature values. The temperature sensor 20 of the present embodiment will be described in more detail later.

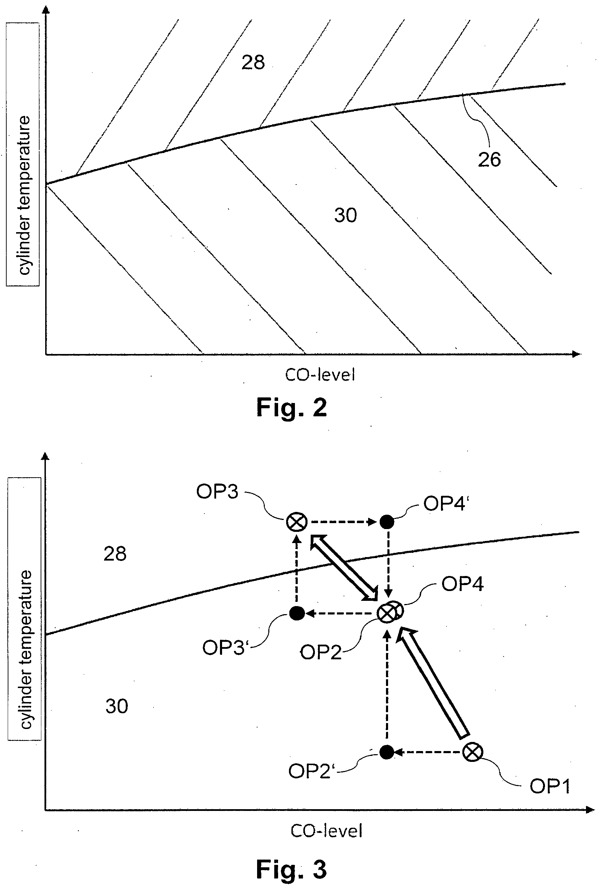

Fig. 2 shows a diagram illustrating the influence of a measured CO-content of the exhaust gas and a measured cylinder temperature of the combustion engine 1 on the occurrence of a no-spark combustion. In the abscissa (x-axis), the CO content of the exhaust gas is indicated. In the ordinate (y-axis), the cylinder temperature of the combustion engine 1 is indicated. The diagram of Fig. 2 is based on experimental data obtained on a test bench. It is noted that the combustion engine 1 of the present embodiment neither measures the CO content of the exhaust gas, nor the cylinder temperature of the combustion engine 1. Nevertheless, the diagram is used to explain the influence of the air-fuel ratio of the air-fuel mixture and the operating conditions, i.e. the ambient and engine conditions, on the occurrence of no-spark combustions.

In particular, the CO content of the exhaust gas is directly correlated to the air-fuel ratio of the air-fuel mixture burned in the combustion chamber 4. At a CO content of 0%, the air-fuel ratio is approximately λ=1. A high CO content, thus, indicates a rich air-fuel mixture, whereas a low CO content indicates a lean air-fuel mixture. Accordingly, the abscissa also represents the air-fuel ratio of the air-fuel mixture. On the other hand, the cylinder temperature is correlated to the operating conditions of the combustion engine 1. When the ambient temperature is high and/or when the combustion engine 1 runs at a high load for a long time, the cylinder temperature rises. With a high ambient and cylinder temperature, the air-fuel mixture will also have a higher temperature and will particularly reach a higher temperature during compression, which increases the tendency toward a no-spark combustion.

The line 26 represents the no-spark combustion border ("NSC-border"). In the no-spark combustion region ("NSC region") 28 above the NSC-border 26, a no-spark combustion occurs. In the no no-spark combustion region ("no NSC region") 30 below the NSC-border 26, a no-spark combustion does not occur. It is noted that the NSC-border 26 indicated in Fig. 2 was determined on a test bench, wherein the combustion engine 1 was run, starting from a cool cylinder, at full load and constant rotation speed with a fixed air-fuel ratio until a no-spark combustion was detected. This was carried out at different fixed air-fuel ratios to obtain the NSC-border line, wherein the varied spark timing (activation stroke) for increasing the tendency toward a no-spark combustion in the no-spark-ignition stroke for detecting the no-spark combustion was kept constant. The control for finding a stable operating point at the NSC-border 26 according to the present embodiment is described below with reference to Fig. 3.

Fig. 3 shows a diagram illustrating a possible adjustment of the air-fuel ratio by the combustion engine 1. At operating point OP1, e.g. shortly after starting the combustion engine 1, the first no-spark-ignition stroke and no-spark combustion detection step is carried out. Since shortly after the start of the combustion engine 1, the engine is still cold and, thus, OP1 lies in the no NSC region, no no-spark combustion is detected. It is noted that the combustion engine 1, in the present case, is configured to start with a rich air-fuel ratio. Since no no-spark combustion is detected, the control device 24 adjusts the air-fuel ratio to the leaner side, so that the operating point is changed to OP2'. Then, after a certain amount of cycles or time, the second no-spark-ignition stroke is carried out at OP2. Since the air-fuel ratio is now leaner, the combustion engine 1 has heated up more quickly and has a higher temperature at OP2. Since OP2 is still in the no NSC region, no no-spark combustion is detected and the control device 24 adjusts the air-fuel ratio even more leaner to OP3'. Then, again after a certain amount of cycles or time, a third no-spark-ignition stroke is carried out at OP3. Since the air-fuel ratio is now even more leaner, the combustion engine 1 has reached an even higher temperature at OP3, so that OP3 now lies in the NSC region. Thus, a no-spark combustion is detected at OP3. Accordingly, the control device 24 now adjusts the air-fuel ratio to the richer side to OP4'. When after a certain amount of cycles or time, a fourth no-spark-ignition stroke is carried out at OP4, the combustion engine 1 has cooled down because of the richer air-fuel ratio, so that OP4 substantially corresponds to OP2 in the present illustrative case. With a continued control under the same ambient conditions, the combustion engine 1 would now circle around along the operating points OP2/OP4, OP3', OP3 and OP4'. In practice, the operating points are more likely to circle around along varying operating points approximately around a point or area on the NSC-border, which can be considered the stable control point or stable control area for the given operating conditions. This, however, depends on the control strategy applied, which will be described in more detail later.

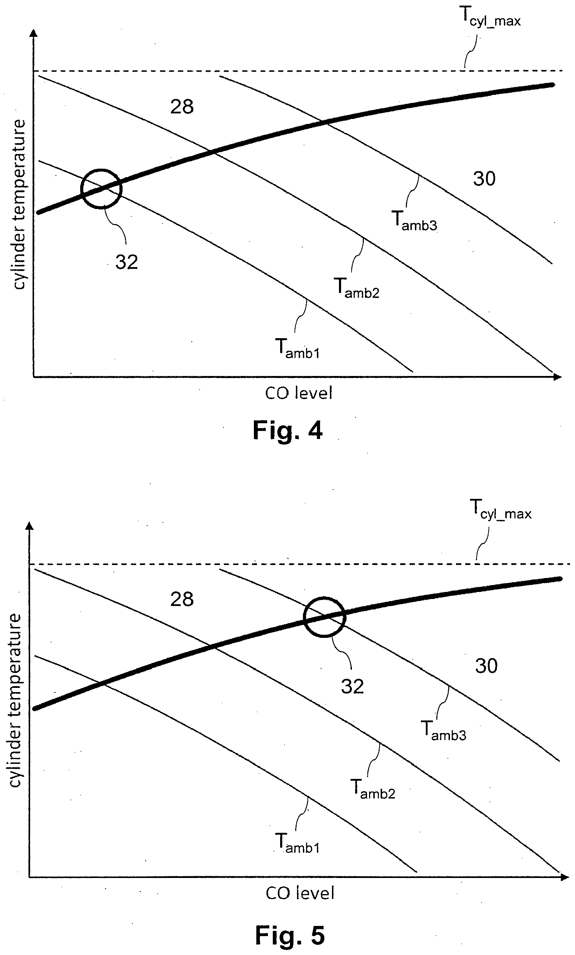

Fig. 4 and Fig. 5 show diagrams illustrating stable control areas 32 for different operating conditions of the combustion engine 1, namely different ambient temperatures. In Figs. 4 and 5, the lines T_{amb1}, T_{amb2} and T_{amb3} represent lines of equal ambient temperature (isothermal lines), wherein T_{amb1} represents the isothermal line of a low ambient temperature, T_{amb2} represents the isothermal line of a medium ambient temperature and T_{amb3} represents the isothermal line of a high ambient temperature. The isothermal lines for the respective ambient temperatures were determined on a test bench by running the combustion engine at a certain constant rotation speed and full load but at different air-fuel ratios. At a low ambient temperature, the cylinder temperature will be lower than at a high ambient temperature for the same air-fuel ratio, due to the stronger cooling of the combustion engine by the ambient air. The line T_{cyl_max} represents the maximum permissible cylinder temperature above which damage of the combustion engine might occur.

In Fig. 4, the case is shown when the combustion engine 1 is operated at low ambient temperatures, e.g. in winter. In this case, since the ambient temperature is low, the cylinder temperature is also low due to the stronger cooling of the cylinder by the ambient air, which results in a low tendency of a no-spark combustion occurring, so that the control device 24 will adjust the air-fuel ratio more to the leaner side until the NSC-border is reached. Thus, the stable control area 32, i.e. the area around the stable operating point in which the control device 24 will adjust the air-fuel ratio to, will be shifted to the leaner side. Advantageously, this increases the fuel efficiency of the combustion engine 1 without the danger of overheating.

On the other hand, in Fig. 5, the case is shown when the combustion engine 1 is operated at high ambient temperatures, e.g. in summer. In this case, since the ambient temperature is high, the cylinder temperature is also high due to the reduced cooling of the cylinder by the ambient air, which results in a high tendency of a no-spark combustion occurring, so that the control device 24 will adjust the air-fuel ratio more to the richer side until the NSC-border is reached. Thus, the stable control area 32 will be shifted to the richer side. Advantageously, this will cool down the combustion engine 1 and typically provide more torque for handling the high load.

Figs. 4 and 5 illustrate the influence of only the ambient temperature on the stable control area set by the control device 24. It is noted that dirt present on the combustion engine 1, a change in the cooling air volume or any other condition of the combustion engine 1 having an influence on the cooling of the cylinder 6 of the combustion engine 1 will lead to a different adjustment of the air-fuel ratio. For example, dirt on the combustion engine 1 will reduce the cooling of the combustion engine 1, which leads to a higher cylinder temperature and, thus, to a richer air-fuel ratio, similar to the case of high ambient temperature. It is further noted that in the diagrams of Figs. 4 and 5, the combustion engine 1 was run constantly at full load, which leads to a high cylinder temperature. When the combustion engine 1 is run constantly at a low load, the cylinder will only reach a lower cylinder temperature, so that the air-fuel ratio will be adjusted to the leaner side until the NSC-border is reached.

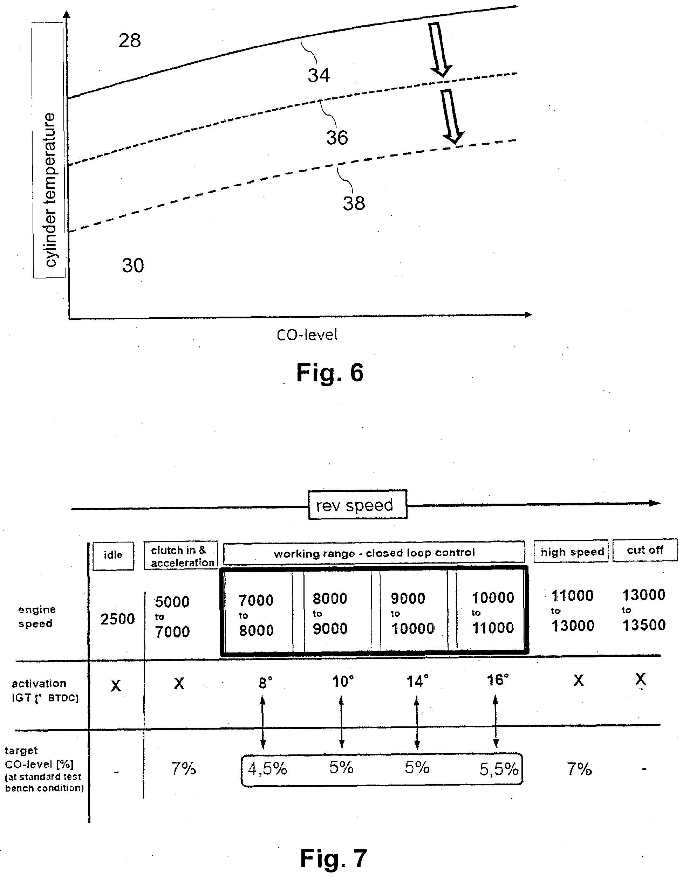

Fig. 6 shows a diagram illustrating the influence of an activation action by varied ignition timing, particularly delayed ignition timing, on the NSC-border. As mentioned above, in the present embodiment, the activation action for increasing the tendency toward a no-spark combustion in the no-spark-ignition stroke is carried out as an activation stroke in which the spark timing of the spark plug 2 is delayed as compared to the spark timing in the spark-ignition stroke during normal operation. An activation action using varied spark timing, i.e. ignition timing, by the spark plug 2 is particularly advantageous in the present embodiment, since no additional means for carrying out the activation action is required.

By delaying the spark timing in an activation stroke in a cycle prior to the no-spark-ignition stroke in which the no-spark combustion detection step is carried out, less energy is transmitted from the burning air-fuel mixture to the piston 8. It is assumed that this is the case due to the circumstance that the flame front follows the piston 8 as it moves away from the top dead position. As a consequence, the exhaust gas of the activation stroke with delayed spark timing has a higher temperature. Due to the higher temperature of the exhaust gas, the residual exhaust gas in the combustion chamber will have a higher temperature. Also, the inner surface of the cylinder 6 of the combustion engine 1 will heat up slightly. Accordingly, a tendency of a no-spark combustion occurring in the following no-spark-ignition stroke increases. Moreover, the exhaust gas of the activation stroke with delayed spark timing includes more radicals which further increases the tendency of a no-spark combustion occurring in the following no-spark-ignition stroke. Advantageously, a no-spark combustion occurring with an increased amount of radicals in the air-fuel mixture is known as an Activated Radical Combustion ("ARC"), which is known to provide a smooth self-ignition combustion at low temperatures due to the large number of evenly distributed radicals serving as combustion-initiating points. The effect of increasing the tendency toward a no-spark combustion in the following no-spark-ignition stroke occurs when delaying the ignition timing in the activation stroke as compared to the ignition timing in the spark-ignition stroke, wherein the later the spark timing, the higher the effect of increasing the tendency toward a no-spark combustion. Preferably, the delayed ignition timing in the activation stroke is set within a range of spark timings of 20° to 0° CA BTDC. It is noted that when the rotation speeds of the engine are increased, the spark timing in the activation stroke can be advanced in order to obtain a constant activation effect.

In the diagram of Fig. 6, the line 34 represents a NSC-border for a spark timing of 25° CA BTDC in a spark-ignition stroke prior to a no-spark-ignition stroke in which the occurrence of a no-spark combustion is detected in the no-spark combustion detection step. Since in the present embodiment, the ignition timing in the spark-ignition strokes is 25° CA BTDC during normal operation, line 34 represents a NSC-border for a case where no activation action is carried out prior to the no-spark-ignition stroke. Lines 36 and 38 represent NSC-borders for a delayed spark timing of 15° CA BTDC and 5° CA BTDC in a spark-ignition stroke (activation stroke) prior to a no-spark-ignition stroke, respectively. It can be identified that the NSC-borders 36 and 38 are shifted toward a cooler side substantially parallelly to the NSC-border 34 that involves no activation action. In other words, the activation action or activation stroke enables to temporarily, namely substantially for the following one cycle including the no-spark-ignition stroke, shift the NSC-border to a cooler side as compared to the NSC-border of the actual normal operation. Since the no-spark combustion is only detected by the control device in said no-spark ignition strokes, the control device 24 will then adjust the air-fuel ratio at or in proximity of the NSC-border corresponding to the specific activation stroke.

By identifying and quantifying the effect of the activation stroke on the NSC-border, the activation stroke can be used to set the air-fuel ratio to a desired value for a given operating condition. This concept can be applied also to other activation actions which allow to vary the effect of increasing or decreasing the tendency toward a no-spark combustion within a certain range.

For example, on a test bench, the combustion engine with a disabled control can be run at a desired air-fuel ratio and under certain operating conditions, such as a certain ambient temperature, pressure and a certain load. For example, the operating conditions can be standard ambient conditions and a maximum load (full load). The desired air-fuel ratio can be freely selected in view of, for example, a balance of a sufficiently low stable operating temperature, fuel efficiency and torque of the combustion engine. The operating temperature of the combustion engine on the test bench can be measured at the cylinder, for example, and the air-fuel ratio can also be measured and identified at the test bench. Then, the control according to the present embodiment is turned on, and the control device 24 will repeatedly carry out the activation stroke, the no-spark-ignition stroke, the detection of the no-spark combustion and the adjustment of the air-fuel ratio. It is noted that at the test bench, the delayed spark timing of the activation stroke can be adjusted.

Starting from a certain air-fuel ratio, the control device 24 will eventually find a stable operating point at the NSC-border, i.e. a certain air-fuel ratio and a certain corresponding operating temperature of the combustion engine. This NSC-border, as explained above, depends on the activation stroke, particularly on the delayed spark timing in the activation stroke. The delayed spark timing of the activation stroke can now be varied at the test bench and the stable operating points corresponding to said delayed spark timings can be monitored. For example, if the air-fuel ratio of a stable operating point corresponding to a certain delayed spark timing is richer than the desired air-fuel ratio, this means that the tendency for a no-spark combustion occurring must be reduced so that the control device 24 can adjust the air-fuel ratio to a more leaner side, which in turn means that the delayed spark timing of the activation stroke must be shifted to a more earlier timing (and vice versa). Eventually, a delayed spark timing can be found at the test bench at which the stable operating point found by the control device 24 corresponds to the above mentioned desired air-fuel ratio. Said eventually found delayed spark timing for the activation stroke can now be loaded into the control device 24, and in actual use away from the test bench, the combustion engine 1 applying this specific activation stroke will always adjust the air-fuel ratio to the desired air-fuel ratio, for operating conditions which are the same as that of the test bench.

It is noted that the NSC-border can also be shifted substantially parallelly toward a hotter side as compared to the NSC-border of the actual normal operation by an activation action decreasing the tendency toward a no-spark combustion, e.g. by advanced ignition timing. The effect of decreasing the tendency toward a no-spark combustion in the following no-spark-ignition stroke occurs when advancing the ignition timing in the activation stroke as compared to the ignition timing in the spark-ignition stroke, wherein the earlier the spark timing, the higher the effect of decreasing the tendency toward a no-spark combustion. Preferably, the advanced ignition timing in the activation stroke is set within a range of spark timings of 40° to 25° CA BTDC. Such a configuration can be applied if it is desired to run the combustion engine 1 by no-spark combustion (self ignition combustion) during normal operation. In such a case, the control device 24 will adjust the air-fuel ratio to a value on or in the proximity of the NSC-border in the no-spark-ignition stroke, while during normal operation, i.e. during the spark-ignition strokes, the combustion engine 1 is operated in a region above the NSC-border. Such a configuration enables to ensure that the combustion engine 1 is run by no-spark combustion during normal operation. Furthermore, by adjusting the advanced ignition timing in the activation stroke, the self ignition timing of the no-spark combustion during the spark-ignition strokes can be precisely adjusted and optimized. It is noted that when the combustion engine 1 is configured to run by no-spark combustion during normal operation, i.e. during the spark-ignition strokes, the self ignition timing is before the spark timing. The spark by the spark plug 2 in the spark-ignition strokes then merely ensures that a combustion takes place in case no self ignition occurs, particularly during the time until a combustion engine 1 starting from a rich air-fuel ratio finds a stable control area. However, in case the combustion engine 1 is configured to run by no-spark combustion during normal operation, a spark plug can also be completely omitted.

Based on the concept of setting the air-fuel ratio to a desired value for a given operating condition by adjusting the spark timing of the activation stroke, it is also possible to vary the desired value for the air-fuel ratio depending on a condition of the engine and/or an ambient condition.

Fig. 7 shows a table illustrating a possible variation of the activation action, specifically the delayed spark timing of the activation stroke, depending on the rotation speed of the combustion engine 1. As explained above, by varying the delayed spark timing of the activation stroke, a desired air-fuel ratio can be obtained for a given operating condition. Now, by varying the delayed spark timing of the activation stroke depending on the rotation speed of the combustion engine 1, a desired value for the air-fuel ratio, to which the control device 24 will adjust the air-fuel ratio to, can be varied over the rotation speed.

For example, the working range of the combustion engine 1 of 7000 rpm to 11000 rpm can be evenly split into four ranges. The control device 24 can be configured such that, in the range from 7000 rpm to 8000 rpm, the delayed spark timing of the activation stroke is set to 8° CA BTDC, which leads to an adjusted air-fuel ratio corresponding to 4.5% CO content. Thus, at low rotation speeds, where the loads are low and the danger of overheating is also low, the air-fuel ratio adjusted by the control device 24 will be lean, so that the combustion engine 1 will be fuel efficient. In the range from 8000 rpm to 9000 rpm, the delayed spark timing of the activation stroke is set to 10° CA BTDC, which leads to an adjusted air-fuel ratio corresponding to 5% CO content. Thus, at medium rotation speeds, where the loads are medium and the danger of overheating is medium, the air-fuel ratio adjusted by the control device 24 will be neither very lean nor very rich, to provide a good balance between fuel efficiency and torque output. The adjusted air-fuel ratio for the range from 9000 rpm to 10000 rpm is the same as for the range from 8000 rpm to 9000 rpm.

However, as the temperature of the combustion engine 1 is higher at the higher rotation speed, and the content of residual gas in the combustion chamber also increases with the rotation speed, the delayed spark timing of the activation stroke must be shifted to an earlier value of 14° CA BTDC. In the range from 10000 rpm to 11000 rpm, the delayed spark timing of the activation stroke is set to 16° CA BTDC, which leads to an adjusted air-fuel ratio corresponding to 5.5% CO content. Thus, at high rotation speeds, where the loads are high and the danger of overheating is high, the air-fuel ratio adjusted by the control device 24 will be rich, to provide high torque output and to prevent overheating of the combustion engine 1. In the ranges 5000 rpm to 7000 rpm and 11000 rpm to 13000 rpm at both edges of the working range, the air-fuel ratio adjustment can be shut off and a predetermined rich air-fuel ratio value (e.g. corresponding to 7% CO content) can be set, which ensures good engine starting properties and prevents overheating.

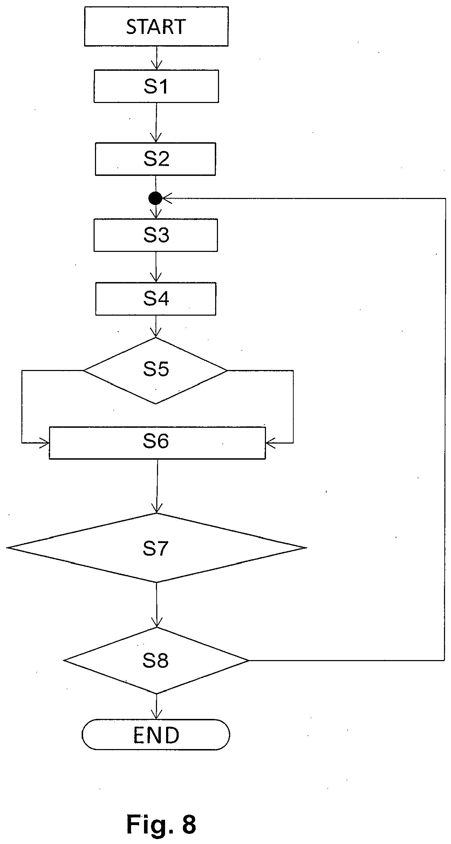

Fig. 8 shows a sequence diagram for a possible control of the combustion engine. After the combustion engine 1 has been started, the control device 24 will carry out normal spark-ignition strokes to run the combustion engine 1 at S1. After a certain amount of cycles or time, the control device 24 will start the air-fuel ratio adjusting routine at S2. In the air-fuel ratio adjusting routine, first, the control device 24 will carry out an activation action at S3, such as an activation stroke in which the spark timing of the spark plug is delayed, so as to increase the temperature and the amount of radicals in the exhaust gas of the activation stroke. Then, in S4, in the cycle directly following the activation stroke, the control device 24 carries out a no-spark-ignition stroke in which the generation of a spark by the spark plug 2 is suppressed. In the following step S5, the no-spark combustion detection step, the control device detects whether a no-spark combustion has occurred in the no-spark-ignition stroke or not. In S6, the control device adjusts the air-fuel ratio of the air-fuel mixture depending on the result in S5. If a no-spark combustion was detected in S5, the control device 24 will adjust the air-fuel ratio to the richer side. If no no-spark combustion was detected in S5, the control device 24 will adjust the air-fuel ratio to the leaner side. In S7, a judgement is made whether the adjusted air-fuel ratio is a suitable air-fuel ratio or not, for example by comparing the current detection result of S5 with previous detection of S5, or the like. In S8, a judgement is made whether to continue the air-fuel ratio adjusting routine, in case of which the control device 24 will return to step S3 again after a certain amount of cycles, or whether to end the air-fuel ratio adjusting routine, based on the judgement of S7.

Fig. 9 shows a perspective sectional view of another embodiment of the combustion engine 1, particularly a cylinder portion thereof, comprising the temperature sensor 20. It is noted that the combustion engine 1 shown in Fig. 9 is a two-stroke engine having one cylinder 6. The piston and the spark plug of the combustion engine 1 are not shown in Fig. 9. The combustion engine 1 comprises an intake port 17 for intaking an air-fuel mixture into the combustion chamber 4, and an exhaust port 18 for discharging the exhaust gas from the combustion chamber 4 into the exhaust system (not shown) after combustion of the air-fuel mixture.

The temperature sensor 20 is mounted to the combustion engine 1 at a position at or in proximity of the exhaust port 18. The temperature sensor 20 is arranged such that the infrared light emitting element 34 thereof is arranged in the stream of exhaust gas in the exhaust port 18 or the exhaust system. In particular, the infrared light emitting element 34 is arranged at a position at which exhaust gas from the combustion chamber 4 directly hits the infrared light emitting element 34 with high velocity, preferably at an angle of about 20° to 50° with respect to the surface of the infrared light emitting element 34. The temperature sensor 20 is arranged such that the part of the holder 36 containing the optical sensor sticks out from the combustion engine 1 and is surrounded by ambient air, preferably in a stream of cooling air.

It is noted that the temperature sensor 20 not only can be used for detecting the occurrence of a no-spark combustion, but can also be used for identifying overheating of the combustion engine 1 to prevent a piston meltdown (blow up). It is further noted that the combustion engine 1 can comprise a further temperature sensor, particularly a thermocouple, in order to enable the control device 24 to calculate an absolute temperature, to identify a cold start or warm start and/or to compensate a temperature drift of the optical sensor arranged in the temperature sensor 20.

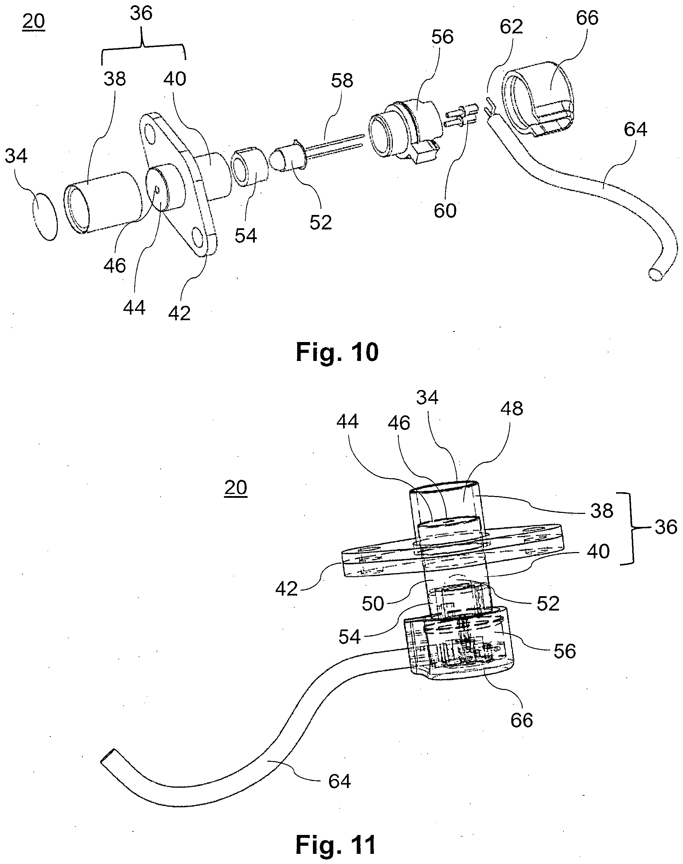

Figs. 10 and 11 show the components of the temperature sensor 20, wherein Fig. 11 shows the mounted state of the temperature sensor 20. The temperature sensor 20 comprises the infrared light emitting element 34 in form of a circular metallic membrane or sheet, which is arranged at an axial end of the holder 36. The holder 36 comprises a bushing 38 and a tube 40. A mounting flange 42 is fixed to the tube 40 for mounting the temperature sensor 20 to the combustion engine 1. The infrared light emitting element 34 is crimped to the front axial end of the bushing 38. A thermal isolator (not shown) can be arranged between the crimped portions of the bushing and the infrared light emitting element 34. The bushing 38 can be molded, machined or stamped and can be formed of material having low thermal conductivity. The tube 40 includes a wall 44 at its front axial end, wherein a pinhole 46 is formed in the center of the wall 44. The tube 40 can be molded, machined or stamped and can be formed of material having low thermal conductivity. The tube 40 and the wall 44 can be formed from one part, or the wall 44 can be formed separately and fixed to the tube 40. The tube 40 can have a thin wall thickness of about 0.1 mm or less to have low axial thermal conductivity.

The bushing 38 and the tube 40 can be fixed together by welding, brazing, press fitting or by adhesive bonding. In the mounted state, a first chamber 48 is formed in the holder 36 between the infrared light emitting element 34 and the wall 44, and a second chamber 50 is formed between the wall 44 and the axial end of the holder 36 opposing the infrared light emitting element 34. An optical sensor 52, preferably a diode, for detecting infrared light emitted from the infrared light emitting element 34 is arranged within the holder 40 in the second chamber 50. Since the optical sensor 52 is arranged in the second chamber 50 separated from the first chamber 48 by the wall 44, the optical sensor 52 is shielded from the heat of the exhaust gas and the parts of the temperature sensor 20 in contact with the exhaust gas, particularly heat from the infrared light emitting element 34 and the bushing 38.

The optical sensor 52 is held in place within the second chamber 50 by a ring 54 surrounding the optical sensor 52, which can be formed of a thermally isolating material. The optical sensor 52 is further held in place by a base 56. The base 56 is fixed to the holder 36 by welding, brazing, press fitting or by adhesive bonding, and closes the open axial end of the tube 40 opposing the wall 44. The base 56 can be formed of a thermally isolating material. Pins 58 of the optical sensor 52 extend through the base 56 and are connected to electrical connectors 60 which electrically connect the pins 58 with electrical conductors 62 of the connecting cord 64 of the temperature sensor 20. The connecting cord 64 is connected to the control device 24. An end cap 66 covers the base 56 and forms the axial end of the temperature sensor 20 opposing the infrared light emitting element 34. It is noted that the temperature sensor 20 of the present embodiment constitutes a two-wire system, but a three-wire system can also be applied according to the need. While a two-wire system has a non-linear signal output but substantially no noise, a three-wire system has a linear signal output but is sensitive to noise.

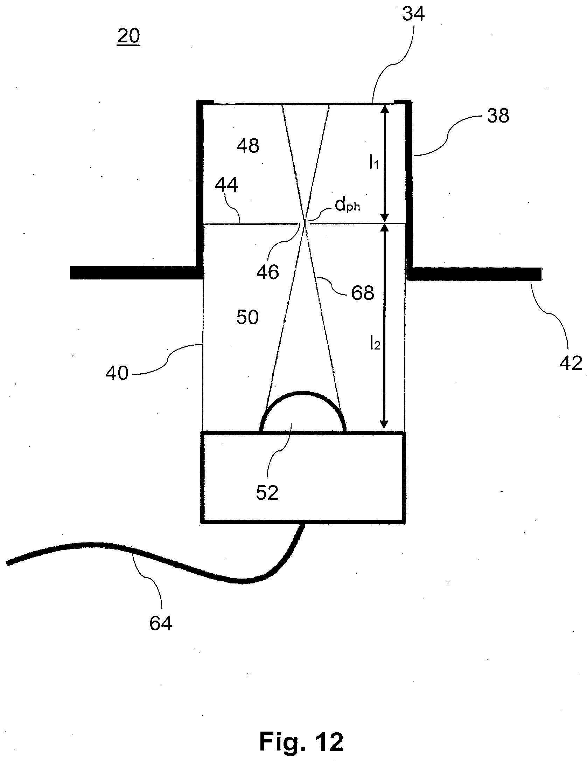

Fig. 12 illustrates the optical path 68 of the infrared light emitted from the infrared light emitting element 34 and reaching the optical sensor 52 after having passed through the first chamber 48, the pinhole 46 and the second chamber 50. The optical path 68 is substantially determined by the relationship of the distance I₁ between the infrared light emitting element 34 and the pinhole 46, the distance I₂ between the pinhole 46 and the optical sensor 52 and the diameter dₚₕ of the pinhole 46. The parameters I₁, I₂ and dₚₕ are set such that only infrared light from a center portion of the infrared light emitting element 34 reaches the optical sensor 52, wherein said center portion of the infrared light emitting element 34 constitutes less than 50%, preferably less than 30%, of the overall surface area of the infrared light emitting element 34. The center portion of the infrared light emitting element 34, the center of the pinhole 46 and the center of the optical sensor 52 are aligned along an axis. Also, the optical axis of the pinhole 46 and the optical axis of the optical sensor 52 coincide. The overall distance between the infrared light emitting element 34 and the optical sensor 52 (i.e. I₁ + I₂), can be in a range of about 15 mm to about 90 mm, preferably about 30 mm to about 50 mm. The diameter dₚₕ of the pinhole can be in a range of about 0.1 mm and about 2 mm. It is noted that more than one optical sensor 52 having different sensitivities in different radiation intensity ranges can be arranged in the second chamber 50. Thereby, a temperature sensor 20 can be provided which can provide more accurate results within a broader temperature range. In such a case, the optical path 68 can be configured such that infrared light from the infrared light emitting element 34 reaches all optical sensors 52. Alternatively, further pinholes 46 can be provided to direct the infrared light onto the respective optical sensors 52.

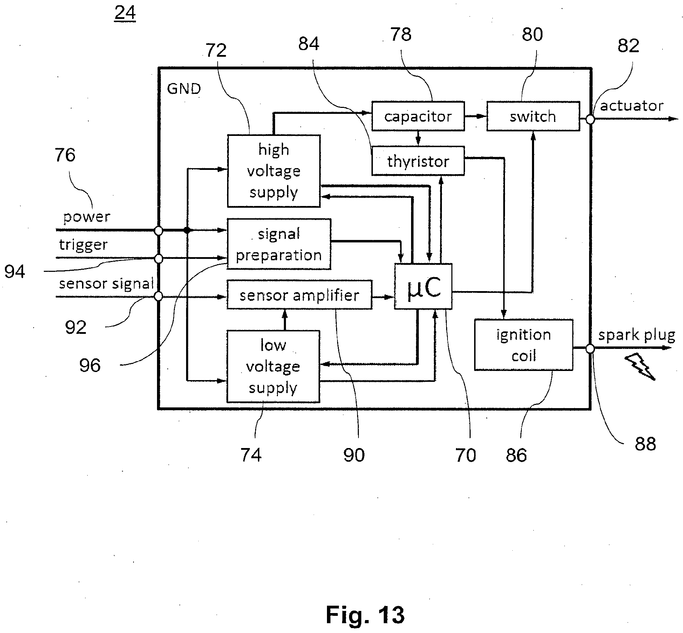

Fig. 13 shows a schematic illustration of the control device 24. The control device 24 comprises a microcontroller 70, components which manage the power supply of the control device, components dedicated for the input of information and components dedicated for the output of information. The power supply of the control device 24 is divided in a high voltage supply 72 and a low voltage supply 74 which both receive their power from an external electrical power source 76.

The high voltage supply 72 is capable of providing voltages in a range from 0 to 250V. The high voltage is provided to a capacitor unit 78, wherein the capacitor unit 78 may comprise more than one capacitor. The high voltage stored in the capacitor unit 78 is provided to the output components of the control device 24 when the microcontroller 70 enables the respective output component. For the first output of the control device 24, the enabling is performed when the microcontroller 70 turns on a switch 80 and the first output signal is provided at a first output terminal 82. In the present embodiment, the first output terminal 82 is connected to the fuel supply means 14 and the first output signal controls an air/fuel ratio of an air-fuel mixture provided to the intake port 17. For the second output of the control device 24, the enabling is performed when the microcontroller 70 turns on a thyristor 84, which provides pulses to an ignition coil 86 capable of providing a high voltage at a second output terminal 88. In the present embodiment, the second output terminal 88 is connected to the spark plug 2 and the second output signal controls a sparking action.

The low power supply 74 is capable of providing voltages in a range from 0 to 12V.

The low voltage provides power to the microcontroller 70 and to a sensor amplifier 90. The sensor amplifier 90 receives a sensor signal at a first input terminal 92 of the control device 24, amplifies the received sensor signal and provides the amplified sensor signal to the microcontroller 70. In the present embodiment, the first input terminal 92 is connected to the temperature sensor 20.

Furthermore, for the timing operations of the microcontroller 70, the control device 24 receives an external trigger signal at a second input terminal 94, which is used in a signal preparation 96 to provide a suitable trigger signal for the microcontroller 70. The signal preparation 96 is directly powered by the external power source 76. In the present embodiment, the second input terminal 94 is connected to the rotation sensor 22. The microcontroller 70 comprises a processor core and memory for processing and storing the received information from the inputs and to provide processing results to the outputs.

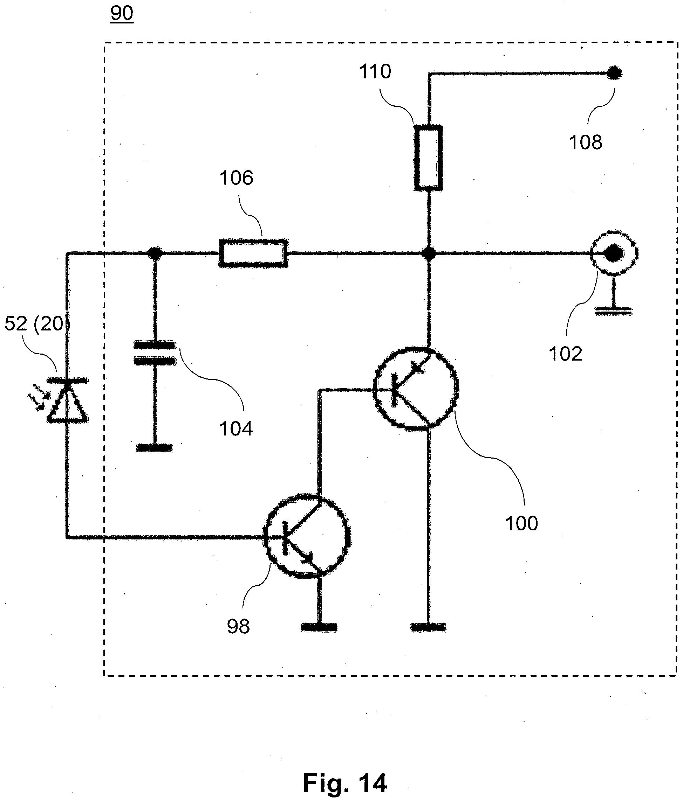

Fig. 14 shows a schematic illustration of the electronic circuit of the temperature sensor 20. The optical sensor 52 of temperature sensor 20 is provided as a diode for infrared light and is connected to the sensor amplifier 90 of the control device 24.

The anode of the diode is connected to the base of a NPN bipolar transistor 98. The emitter of the transistor 98 is connected to ground and the collector of the transistor 98 to the base of a PNP bipolar transistor 100. The collector of the transistor 100 is connected to ground and the emitter of the transistor 100 is connected to the signal out terminal 102. The cathode of the diode is connected to a grounded capacitor 104 and to a resistor 106, which is connected to the signal output terminal 102. The sensor amplifier 90 is powered by the low voltage supply 74 at a power supply terminal 108 via a resistor 110 which is connected to the signal out terminal 102.

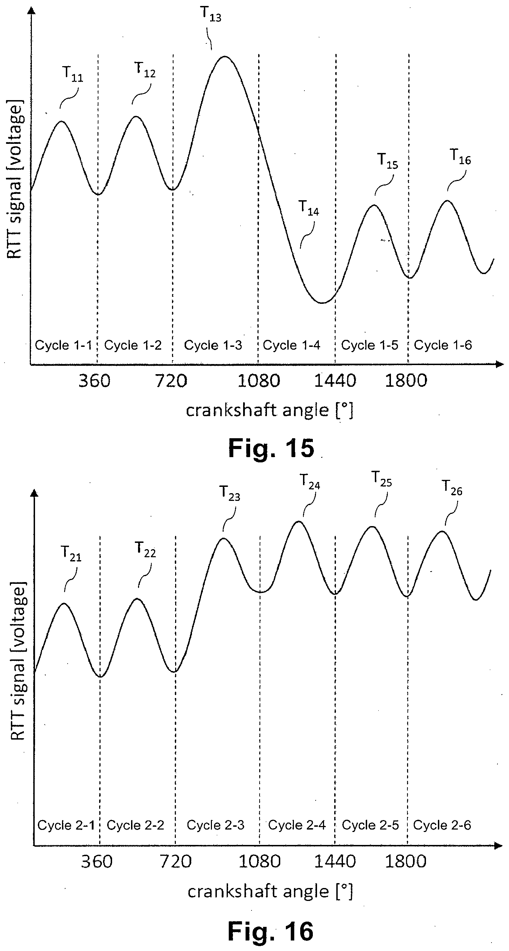

Figs. 15 and 16 show temperature measurement results obtained by the combustion engine 1, wherein Fig. 15 shows an illustrative case in which no no-spark combustion has occurred in the combustion chamber in a change determining cycle. In the abscissa (x-axis), the crankshaft angle is indicated in degree. The temperature measurement was performed with the temperature sensor 20 of the two-stroke combustion engine 1 having one cylinder. The measurement for one cycle of a combustion chamber corresponds to 360° on the x-axis. In the ordinate (y-axis), the exhaust gas temperature measured by the temperature sensor 20 is indicated. It is noted that the measurements are obtained from a combustion engine 1 which has already reached a stable working temperature. It is further noted that there may a certain shift of the temperature signal relative to the measured rotational angle due to the arrangement of the temperature sensor 20 with respect to the combustion chamber 4, i.e. due to the delay in timing until the exhaust gas from the combustion chamber 4 reaches the temperature sensor 20. The illustrative diagrams of Figs. 15 and 16 are to be understood in such a way that the temperature values indicated in a respective cycle are the values for the measured exhaust gas temperature of that respective cycle.

During one cycle of the combustion chamber 4, the exhaust gas temperature measured by the temperature sensor 20 at the exhaust port 18 starts at a lower temperature within the cycle, then the hot exhaust gas from the combustion chamber 4 starts to pass by the temperature sensor 20 so that the temperature at the temperature sensor 20 continuously rises up to a maximum temperature until no more exhaust gas leaves the combustion chamber 4 approximately in the middle of the cycle and then falls back to a lower temperature while substantially no exhaust gas passes by the temperature sensor 20 up to the end of the cycle.

Cycle 1-1 and cycle 1-2 correspond spark-ignition strokes during normal operation, cycle 1-3 corresponds to an activation stroke and cycle 1-4 corresponds to a no-spark-ignition stroke in which the no-spark combustion detection step is carried out. Cycle 1-5 and cycle 1-6 again represent spark-ignition strokes during normal operation. The combustion engine 1 can be configured to obtain temperature measurements at a plurality of points in time during one cycle, or at a single point in time during one cycle. For reliably detecting a change in the exhaust gas temperature between two cycles, it is desirable to detect the mean temperature within said cycles, respectively, preferably the mean temperature within a predetermined crankshaft angle section. Alternatively, the combustion engine 1 can be configured to obtain a single temperature measurement at a crankshaft angle at which the maximum temperature is expected. Preferably, the combustion engine 1 is configured to obtain a plurality of temperature measurements, e.g. 3 to 10 temperature measurements, within a section or range of the crankshaft angle shortly after the outlet port is open, e.g. 90° to 180°, in which the maximum exhaust gas temperature is expected, and then use the maximum value or mean value thereof. The combustion engine 1 can also be configured to filter out runaway values of the temperature measurements before determining the maximum value or mean value of the temperature measurements.

Since cycle 1-1 and cycle 1-2 are spark-ignition strokes during normal operation, the corresponding temperature signals T₁₁ and T₁₂ obtained by the combustion engine 1 are substantially the same. Since cycle 1-3 is an activation stroke in which the spark timing is delayed, the measured exhaust gas temperature T₁₃ of said activation stroke is higher than T₁₁ and T₁₂ of the preceding normal operating spark-ignition strokes. Cycle 1-4 is a no-spark-ignition stroke in which the generation of a spark by the spark plug 2 is suppressed and the no-spark combustion detection step is carried out. As indicated above, the diagram of Fig. 15 illustrates a case where no no-spark combustion occurs in the no-spark-ignition stroke. Accordingly, the measured exhaust gas temperature T₁₄ of cycle 1-4 is lower than the temperature T₁₃ of the activation stroke and temperatures T₁₁ and T₁₂ of the preceding normal operating spark-ignition strokes. In the no-spark combustion detection step, the combustion engine 1 compares the temperature T₁₄ of the no-spark-ignition stroke with the temperature T₁₃ of the activation stroke, and since the difference exceeds a certain predetermined threshold, determines that no no-spark combustion has occurred in the no-spark-ignition stroke. Based on this determination, the combustion engine 1 adjusts the air-fuel ratio to the lean side according to the present embodiment. It is noted that the combustion engine 1 can also compare the temperature T₁₄ of the no-spark-ignition stroke with the temperatureT₁₂ of the preceding normal operating spark-ignition stroke 1-2 in order to determine whether or not a no-spark combustion has occurred as the no-spark combustion detection step.

Fig. 16 shows an illustrative case in which a no-spark combustion has occurred in the combustion chamber in a no-spark-ignition stroke. The temperature measurement results are obtained under similar measurement conditions as described in Fig. 15. Similar to the case in Fig. 15, cycle 2-1 and cycle 2-2 correspond to normal operating spark-ignition strokes, cycle 2-3 corresponds to an activation stroke and cycle 2-4 corresponds to a no-spark-ignition stroke in which the no-spark combustion detection step is carried out. Cycle 2-5 and cycle 2-6 again represent normal operating spark-ignition strokes. Since cycle 2-1 and cycle 2-2 are normal operating spark-ignition strokes, the corresponding temperature signals T₂₁ and T₂₂ obtained by the combustion engine 1 are substantially the same. Since cycle 2-3 is an activation stroke in which the spark timing is delayed, the measured exhaust gas temperature T₂₃ of said activation stroke is higher than T₂₁ and T₂₂ of the preceding normal operating spark-ignition strokes. Cycle 2-4 is a no-spark-ignition stroke in which the generation of a spark by the spark plug 2 is suppressed and the no-spark combustion detection step is carried out. As in the case illustrated in Fig. 16, a no-spark combustion occurs in the no-spark-ignition stroke, the measured exhaust gas temperature T₂₄ of cycle 2-4 is substantially equal to or slightly higher than the temperature T₂₃ of the activation stroke and higher than temperatures T₂₁ and T₂₂ of the preceding normal operating spark-ignition strokes. In the no-spark combustion detection step, the combustion engine 1 compares the temperature T₂₄ of the no-spark-ignition stroke with the temperature T₁₃ of the activation stroke, and since the difference does not exceed a certain predetermined threshold, determines that a no-spark combustion, has occurred. Based on this determination, the combustion engine 1 adjusts the air-fuel ratio to the rich side according to the present embodiment. It is noted that as the no-spark combustion detection step, the control device 24 can also compare the temperature T₂₄ of the no-spark-ignition stroke with the temperatureT₂₂ of the preceding normal operating spark-ignition stroke 1-2 in order to determine whether or not a no-spark combustion has occurred, since T₂₄ of the no-spark-ignition stroke cycle 2-4 is higher than T₂₂ of the preceding normal operating no-spark-ignition stroke 1-2.

In Figs. 15 and 16, it is shown that the temperatures T₁₅, T₁₆ (T₂₅, T₂₆) of the two normal operating spark-ignition strokes 1-5 and 1-6 (2-5 and 2-6) following the no-spark-ignition stroke 1-4 (2-4) are similar to the temperature T₁₄ (T₂₄) of said no-spark-ignition stroke. This is merely to indicate that the combustion engine 1 may have a configuration and/or the temperature sensor 20 may have a certain thermal inertness such that it may take a few cycles time until the temperature measurements obtainable by the combustion engine 1 gradually reaches the initial temperature T₁₁, T₁₂ (T₂₁, T₂₂) of the normal operating spark-ignition strokes 1-1 and 1-2 (2-1 and 2-2). However, depending on the configuration of the combustion engine 1 and/or the temperature sensor 20, the temperature in the normal operating spark-ignition stroke 1-5 (2-5) directly following the no-spark-ignition stroke 1-4 (2-4) may already substantially reach the level of the preceding normal operating spark-ignition strokes 1-1 and 1-2 (2-1 and 2-2).

### List of Reference Numerals

- 1: combustion engine
- 2: spark plug
- 4: combustion chamber
- 6: cylinder
- 8: piston
- 10: crank shaft
- 12: air intake
- 14: fuel supply means
- 16: fuel tank
- 17: intake port
- 18: exhaust port
- 19: intake valve
- 20: temperature sensor
- 21: exhaust valve
- 22: rotation sensor
- 24: control device
- 26: NSC-border
- 28: NSC region
- 30: no NSC region
- 32: stable control area
- 34: infrared light emitting element
- 36: holder
- 38: bushing
- 40: tube
- 42: mounting flange
- 44: wall
- 46: pinhole
- 48: first chamber
- 50: second chamber
- 52: optical sensor
- 54: ring
- 56: base
- 58: pins
- 60: electrical connectors
- 62: conductors
- 64: connecting cord
- 66: end cap
- 68: optical path
- 70: microcontroller
- 72: high voltage supply
- 74: low voltage supply
- 76: external electrical power source
- 78: capacitor unit
- 80: switch
- 82: first output terminal
- 84: thyristor
- 86: ignition coil
- 88: second output terminal
- 90: sensor amplifier
- 92: first input terminal
- 94: second input terminal
- 96: signal preparation
- 98: NPN bipolar transistor
- 100: PNP bipolar transistor
- 102: signal out terminal
- 104: grounded capacitor
- 106: resistor
- 108: power supply terminal
- 110: resistor
- T_{amb1}: isothermal line of low ambient temperature
- T_{amb2}: isothermal line of medium ambient temperature
- T_{amb3}: isothermal line of high ambient temperature
- T_{cyl_max}: maximum permissible cylinder temperature
- I₁: distance between infrared light emitting element and pinhole
- I₂: distance between pinhole and optical sensor
- dₚₕ: diameter of pinhole
- T₁₁ - T₁₆: measured temperatures of cycle 1-1 to cycle 1-6
- T₂₁ - T₂₆: measured temperatures of cycle 2-1 to cycle 2-6

## Claims

1. A combustion engine (1) comprising:
a combustion chamber (4) in which an air-fuel mixture can be ignited, and
a control device (24) capable of adjusting a factor of the combustion engine and further capable of carrying out a no-spark combustion detection step of detecting whether a no-spark combustion has occurred or not in the combustion chamber (4),
wherein the control device (24) is configured to adjust the factor of the combustion engine (1) so as to decrease the tendency toward a no-spark combustion when a no-spark combustion is detected in the no-spark combustion detection step, and
wherein the control device (24) is configured to adjust the factor of the combustion engine (1) so as to increase the tendency toward a no-spark combustion when no no-spark combustion is detected in the no-spark combustion detection step.

2. The combustion engine (1) of claim 1, wherein the control device (24) is configured to memorize respective factor adjustments of two subsequent no-spark combustion detection steps, if detection results of said two subsequent no-spark combustion detection steps differ.

3. The combustion engine (1) of claim 1 or 2, further comprising:
a spark plug (2) for igniting the air-fuel mixture in the combustion chamber (4),
wherein the control device (24) is capable of controlling sparking actions of the spark plug (2),
wherein the control device (24) is configured to selectively carry out a spark-ignition stroke in which the air-fuel mixture is spark-ignited by the spark plug (2) and a no-spark-ignition stroke in which generation of a spark by the spark plug (2) is suppressed in the spark-ignition stroke, and
wherein the control device (24) is configured to carry out the no-spark combustion detection step during the no-spark-ignition stroke.

4. The combustion engine (1) of any one of the preceding claims, wherein the factor of the combustion engine (1) to be adjusted is an air-fuel ratio of the air-fuel mixture.

5. The combustion engine (1) of claim 4, wherein the control device (24) is configured to adjust the air-fuel ratio to the rich side when a no-spark combustion has been detected in the no-spark combustion detection step, and to adjust the air-fuel ratio to the lean side when no no-spark combustion has been detected in the no-spark combustion detection step.

6. The combustion engine (1) of any one of the preceding claims, further comprising a sensor (20) for detecting a characteristic indicative of an occurrence of the no-spark combustion.

7. The combustion engine (1) of claim 6, wherein the sensor (20) is a temperature sensor (20).

8. The combustion engine (1) of any one of the preceding claims, wherein the combustion engine (1) is configured to carry out an activation action for increasing or decreasing the tendency toward the no-spark combustion during the no-spark combustion detection step.

9. The combustion engine (1) of claim 8, wherein the activation action is varied depending on a condition of the engine (1) and/or an ambient condition.

10. The combustion engine of claim 8 or 9, wherein the activation action includes varying the ignition timing by the spark plug (2) in a cycle prior to the no-spark combustion detection step.

11. A method for controlling a combustion engine (1), comprising:
carrying out a no-spark combustion detection step of detecting whether a no-spark combustion has occurred or not in a combustion chamber (4),
adjusting the factor of the combustion engine (1) so as to decrease the tendency toward a no-spark combustion when a no-spark combustion is detected in the no-spark combustion detection step, and
adjusting the factor of the combustion engine (1) so as to increase the tendency toward a no-spark combustion when no no-spark combustion is detected in the no-spark combustion detection step.

12. A computer program product comprising computer-readable instructions, which, when loaded and executed on a computer system, cause the computer system to perform operations according to claim 11.
